# EUROPEAN PATENT APPLICATION

(11) **EP 4 559 710 A1**
(43) Date of publication of application: **28.05.2025**
(21) Application number: 23211349.8
(22) Date of filing: 22.11.2023
(51) Int. Cl.: B60K 11/08

(54) **AERO SHUTTER FOR A VEHICLE**

(71) Applicant: Wuhan Lotus Cars Co., Ltd., Wuhan, Hubei (CN)
(72) Inventor: Wiech, Thomas, 64295 Darmstadt (DE); Neumann, Alexander, 64579 Gernsheim (DE); Chao, Hu, Wuhan (CN)
(74) Representative: Studio Torta S.p.A.

(57) **Abstract**

The invention relates to an aero shutter (10) for a vehicle, comprising:
at least one opening (14) through which air can flow;
a plurality of flaps (16) that are distributed along a circumference of the opening (14), each flap (16) being rotatable about a pivot joint (22) between a closed state in which it covers a section of the opening (14) and an opened state in which it does not cover the opening (14) or only covers it to a lesser extent compared to the closed state.

## Description

The invention relates to an aero shutter for a vehicle. The vehicle may e.g. be a road vehicle, such as a car, a truck or a bus.

Aero shutters in a vehicle and in particular at or near a front face thereof, such as at a grille, can be used to adjust the air resistance to the current driving situation: The air resistance is lower when they are closed. As a result, fuel consumption is lower. With the shutters open, cooling of the engine compartment is enhanced and the A/C-system is assisted. For achieving these effects when opened, a respectively increased air resistance is accepted. Aero shutters which are configured to change between respective opened and closed state are also referred to as active aero shutters.

Typically, aero shutters comprise several vanes which are connected to each other and rotate in the same direction. The vanes are oriented either vertically or horizontally and all rotate around either a horizontal or a vertical axis. Based on the either horizontal or vertical movement of the vanes the shutter design possibilities are limited. An example can be found in WO 2014/150140 A1.

WO 2022/161621 A1 discloses an active shutter having counter rotating closing plates which are rotating in several angles.

There remains room for improvement in the design of aero shutters, e.g. in terms of the space occupied within a vehicle, in terms of degrees of freedom in design or in terms of structural complexity.

This object is solved by the subject-matter of independent claim 1. Further embodiments of this invention are defined in the dependent claims, in this description and in the figures.

Accordingly, an active aero shutter for a motor vehicle is disclosed, the active aero shutter comprising:
- at least one opening through which air can flow;
- a plurality of flaps that are distributed along a circumference of the opening, wherein each flap is rotatable about a pivot joint between a closed state in which it covers a section of the opening and an opened state in which it does not cover the opening or only covers it to a lesser extent compared to the closed state.

This aero shutter may also be referred to and/or may represent an active aero shutter. In particular, the aero shutter may comprise or be connectable to an actuator that is configured to move the flaps between the opened and closed state. This may e.g. be achieved by the actuator at least indirectly pushing and/or pulling the flaps so as to move according to any of the manners disclosed herein.

The opening may be provided in a frame member and/or may define a cut-out. The frame member may be or may be comprised by a cover member of the vehicle, such as a front bumper cover. The frame member may be a single-part member or a multipart member. A shape of the opening is not limited. In one example, the opening is substantially or fully circular, but it could e.g. also be rectangular or oval or polygonal, such as octagonal or hexagonal. The circumference of the opening may bound or delimit the open area thereof. In one example, the opening has a closed circumference. Additionally or alternatively, a normal vector of the open area of the opening may extend in a forward driving direction of the vehicle.

The flaps may also be referred to and/or may be configured as blades. The flaps may each be similarly sized and/or similarly shaped. The flaps may be identical. They may be jointly movable. They may cover similarly sized sections of the opening in the closed state and/or in the opened state. The flaps may be regularly spaced about the circumference of the opening. By providing respective degrees of similarity and/or regularity, a movement mechanism for, in particular jointly, moving the flaps may be simplified.

In one example, the flaps each move in the same direction when changing between the opened and closed state. For example, the flaps may each rotate in a counter clockwise or clockwise direction about their respectively associated pivot joint. This enables tightly arranging the flaps circumferentially next to one another without obstructing each other's movements.

Additionally or alternatively, at least one flap may be movable into an area in which another flap was previously positioned. For example, when changing from the closed to the opened state, at least one flap may be moveable into and/or across an area in which another flap was previously positioned. This promotes a space-efficient operation of the aero shutter.

The flaps may be configured to, at least in the closed state, contact the circumference of the opening and/or a region of a frame member that is adjacent to the opening. This increases airtightness of the closed aero shutter. Additionally or alternatively, the flaps may contact each other at least in the closed state. For example, adjacent edges of two adjacent flaps, in particular circumferentially directly adjacent flaps, may contact one another. This improves airtightness. For example, each flap may have two adjacent flaps, in particular when viewed in a circumferential direction. Differently put, each flap may be circumferentially positioned between two other flaps. At least in the closed state, each flap may contact its two circumferentially adjacent flaps. Any contact between two flaps may occur along edges which extend along a radial direction.

For example, each flap may have a first and a second curved edge that e.g. extend along a radial direction. One of said edges may be convexly curved, whereas the other is concavely curved. The convexly curved edge may, e.g. at least in the closed state, be received in or by a concavely curved edge of an adjacent flap. The concavely curved edge may, e.g. at least in the closed state, receive a convexly curved edge of another adjacent flap. Any optional convexly curved edge of a flap may have a radius and in particular a constant radius that is defined with respect to the pivot axis. Providing curved edges according to any of the above examples ensures that the flaps can be reliably moved relative to one another when changing between the opened and closed state, while also reliably closing the opening in the closed state.

In one example, the flaps are positioned circumferentially next to one another without overlaps therebetween. This may apply both of the opened and closed state. Avoiding such overlaps limits a risk of jamming and reduces part sizes.

The pivot joint may be non-movable relative to the circumference. It may generally assume a stationary position within the aero shutter. At least a part of each flap that is coupled to the pivot joint may be non-movable along the circumference. The flaps may rotate about the pivot joint, but may generally remain within a defined angular sector and/or in a defined area of the circumference.

The pivot joint may e.g. comprise a pin-recess-connection. In this case, a pin may be provided at either the opening's circumference and/or frame member or at the flap. Said pin may be rotatably received in a recess provided in the respective other one of the flap and the opening's circumference and/or frame member. The configuration of the pivot joint is, however, not limited and may include any other suitable form of e.g. a pivot hinge or pivot bearing.

For changing between the opened and closed state, the flaps may be configured to perform a rotating motion and/or a pivoting motion. Such motions can be performed in a space-efficient manner, thus limiting the overall space requirements of the aero shutter. A rotation axis of the rotating motion of the flap may extend in parallel to the axis of rotation of the respectively associated pivot joint.

In sum, the disclosed aero shutter reliably ensures airtightness in the closed state while being marked by space-efficient movements at a limited structural complexity.

According to one example, the flaps are configured to jointly cover the entire opening when each flap assumes its closed state. This may in particular comprise covering the opening, so that it is fully obstructed and no air may pass therethrough.

In a further embodiment, the flaps are coupled to a common movement mechanism that is operable to simultaneously rotate the flaps about their pivot joints. The movement mechanism may comprise at least one movable member to which the flaps are at least indirectly coupled. The movable member may move linearly or may rotate. The movable member may be connected to an actuator, e.g. an electric motor. This actuator may be comprised by the aero shutter or may be an external part. Coupling all flaps to a common movement mechanism may help to further reduce complexity.

In one aspect, a rotation axis of each pivot joint extends at an angle to an area, such as the opened area or opening cross-section, of the opening. Generally, the opening may comprise or be defined as a two-dimensional empty area or plane. The rotation axis of each pivot joint may extend at an angle to this area, in particular at an angle of more than 20°, more than 45 ° and/or substantially orthogonally thereto. The smallest angle between the rotation axis and the area may be considered in these cases.

According to another example, the aero shutter comprises a first member and a second member. Both or at least one of the first and second member may be movable. In particular, the first member and the second member may be movable relative to one another. The first member may be or may be, in particular directly, connected to the frame member. The second member may contact the frame member, but may e.g. be slidable relative thereto and/or may be guided thereby when moving. The second member may be comprised by or may be connected to the movement mechanism.

Each flap may be connected to the first member via the pivot joint. Additionally or alternatively, each flap may be coupled to the second member, e.g. via a coupling member or coupling portion.

During the relative movement of the first and second member, each flap may be rotatable about the pivot joint to move between the opened and closed state. For example, the flaps may be movable in accordance with a movement of the second member. By being held at the first member via the pivot joint, a movement of the of the flaps can be accurately guided in accordance with a movement of the second member.

In another embodiment, the second member is rotatable about a rotation axis that extends at an angle to the opening, in particular to the open area thereof as e.g. formed in a frame member. For example, the rotation axis may point in a forward driving direction. The second member may be rotatable about the same rotation axis (or at least a parallel rotation axis) as the flaps and/or the pivot joints. Specifically, the second member may be rotatable in a same spatial plane or a spatial plane extending in parallel to a spatial plane in which the flaps rotate. This increases space-efficiency of the aero shutter.

For generating the rotating movement, the second member may be connected to a linearly moving member, such as a rod, of the movement mechanism. The second member may be coupled to said linearly moving member in such a manner, so as to rotate when the linearly moving member moves back and forth along its linear movement axis. The coupling may e.g. include a pin-slot-coupling and/or may generally be configured to translate the linear movement into the rotating movement. This way, the rotating movement can be generated at a limited size and/or with an actuator of the movement mechanism that is optionally positioned at significant distance from the opening.

In one example, the aero shutter comprises a number of openings that are to be opened and closed, wherein a plurality of second members (e.g. one for each opening or one for a number of said openings, e.g. half the openings) is coupled to one linearly moving member. This reduces structural complexity while increasing the number of openings that can be selectively opened and closed.

It is to be noted that the disclosed aero shutter may comprise the movement mechanism according to any of the embodiments disclosed herein. Alternatively, the aero shutter may be connected to a respective movement mechanism that is separately provided.

According to one example, the second member extends along at least a section of the opening's circumference. For example, it may fully surround said circumference and/or may comprise an opening, too, which surrounds and/or receives the opening that is to be opened and closed. The openings may be concentric to one another.

The second member may in particular be ring-shaped. In this case it may e.g. be a substantially planar member. The opening of the ring-shape may surround and/or receive the opening that is to be opened and closed.

Additionally or alternatively, the second member may comprise a cylindrical section. The cylindrical section may have a circular cross-section or circular base shape and/or may have a cross-sectional shape matching a circumferential shape of the opening that is to be opened and closed. The cylindrical section may generally be opened to both sides. For example, it may comprise and/or consist of a cylindrical wall, such as a mantle surface. A longitudinal axis of the cylindrical section, e.g. a central axis about which the cylindrical wall extends circumferentially, may extend at an angle and in particular orthogonally to the area of the opening that is to be opened and closed. Additionally or alternatively, said longitudinal axis may extend in parallel to a rotation axis of the pivot joints and/or the flaps. To ensure compactness, a length of the cylindrical section along the longitudinal axis may be less than a dimension of the cylindrical section orthogonally to said longitudinal axis, such as a diameter.

The cylindrical section may have an inner face, in particular an inner circumferential face. The coupling member may be provided at or may be connected to said inner face. The inner face may face the flaps and/or a geometric centre of the opening. At least a part of the flaps may overlap with at least a part of said inner face.

The cylindrical section may in particular be provided in connection with three-dimensionally curved flaps, such as the convex or bulging flaps disclosed herein (see below). It has been found that the cylindrical section is a space-efficient member that can accurately generate and guide the movements of the flaps.

According to a further embodiment, the first member is immovable. This way, the first member and in particular the pivot joint connected thereto may act as a type of counter bearing for the movable first member. Specifically, the flaps may transmit forces between the first and second members while being moved relative to the immovable first member. Making the first member immovable helps to accurately guide the movement of the flaps and simplifies the overall structure.

According to a further example, the coupling between the flaps and the second member includes a rotational degree of freedom and/or a linear degree of freedom. This way, the coupling may act or include a gear stage and/or a movable link that accurately translates a movement of the second member into a desired movement a respectively connected flap. This increases the degrees of freedom with respect to the design of the second member and the flaps. When the coupling is provided by way of a distinct coupling member, said coupling member may be flexibly adjusted to a given design of the second member and the flaps in order to generate the desired movements.

According to one example, the flaps are flat. This increases space-efficiency. A plane of the flaps may e.g. extend in parallel to an open area of the opening.

Alternatively, the flaps may be three-dimensionally shaped and in particular three-dimensionally curved. For example, they may be convexly curved or, put differently, may be outwardly bulging relative to the opening. For example, the flaps may be rounded and/or part-spherical. The convex or bulging shape may help to reduce aerodynamic resistance.

According to one example, the flaps comprise at least a first flap and a second flap, the first flap having a first edge facing a second edge of the second flap, wherein the first edge and the second edge are complementary curved. This may e.g. include a convex and concave curvature of said edges as previously discussed. Due to the complementary curvature, the edges may be received in one another while improving airtightness.

In a further embodiment, the aero shutter comprises a plurality of openings each having a respective plurality of flaps, wherein all flaps of all openings are coupled to a common movement mechanism. In particular, the common movement mechanism may be operable to simultaneously rotate all flaps to simultaneously cover and open each of the openings. The common movement mechanism may e.g. include at least one linearly movable member as discussed above or some other movable member to which each a respective plurality of second members are coupled. Providing a plurality of openings increases the amount of air that can be selectively taken in via the aero shutter. Using a common movement mechanism reduces the part number and structural complexity.

Embodiments of the invention are discussed below with respect to the attached schematic Figures. Throughout the Figures, same or corresponding features may be marked with same reference signs.
Figure 1 is a front view of an aero shutter according to a first embodiment of the invention, the aero shutter assuming a closed state.
Figure 2 is a rear view of an aero shutter according to a first embodiment of the invention.
Figure 2a is a detail view of the aero shutter according to a first embodiment in a closed state.
Figure 3 is another detail view of the aero shutter according to a first embodiment in a closed state.
Figure 4 is a view similar to Figure 3 with the aero shutter in an opened state.
Figure 5 is a front view of an aero shutter according to a second embodiment of the invention, the aero shutter assuming a closed state.
Figure 6 is a rear view of an aero shutter according to a second embodiment of the invention.
Figure 7 is a view similar to Figure 5 with the aero shutter assuming an at least partially opened state.
Figure 8 is a view similar to Figures 5 & 7 with the aero shutter assuming a fully opened state.
Figure 9 is a detail view of the aero shutter according to the second embodiment in a closed state.
Figure 10 is a detail view of the aero shutter according to the second embodiment in an opened state.

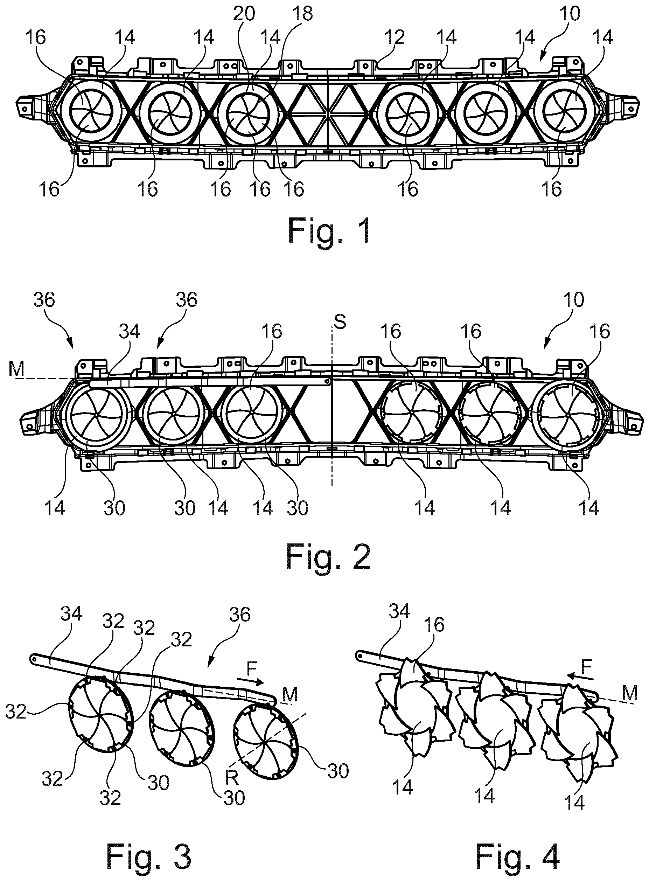

Figure 1 is a front view of an aero shutter 10 according to a first embodiment of the invention. A viewing angle corresponds to a viewing angle when looking at a front of a non-illustrated vehicle, in particular a car, to which the aero shutter 10 is mounted. The aero shutter 10 comprises an optional frame member 12. The frame member 12 is connectable to a not specifically illustrated front bumper cover of the vehicle or maybe integrally formed therewith. Only part of the frame member 12 may be visible when looking at the non-illustrated vehicle from outside. The frame member 12 is generally immovably mounted within the vehicle. The aero shutter 10 may e.g. be positioned below of a front grille or a license plate of the vehicle.

The aero shutter 10 comprises an exemplary number of six openings 14. The openings 14 are each configured as cut-outs in the frame member 12, thereby defining two-dimensional open areas through which air can flow.

In Figure 1, the aero shutter 10 is depicted in a closed state with each opening 14 being closed. Specifically, for each opening 14, an exemplary number of six flaps 16 is provided. Only selected ones of these flaps 16 are marked with a respective reference sign throughout the Figures. The flaps 16 are circumferentially distributed along each opening 14. Specifically, each flap 16 extends along one circumferential section and/or angular sector of an opening 14 at which a respective flap 16 is provided.

In the depicted closed state, the flaps 16 contact one another along radially oriented curved edges 18, 20 as discussed in further detail below. Also, the flaps 16 are configured as planar members, and in particular planar blades, and extend in or at least in parallel to an open area of the opening 14.

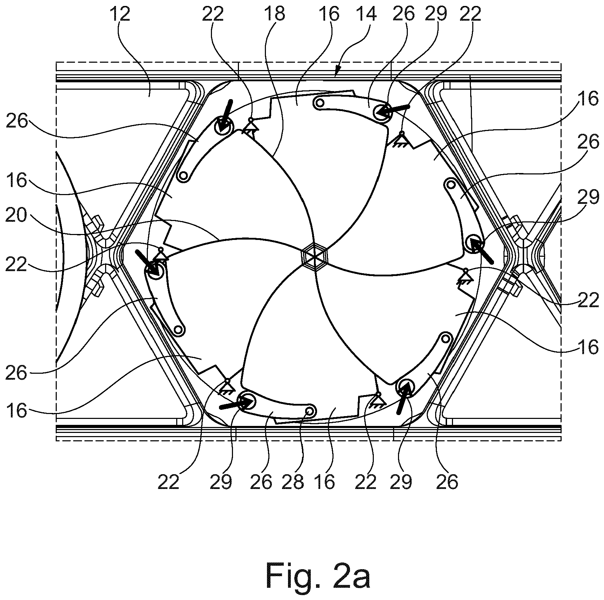

Figure 2 is a rear view of the aero shutter 10 of Figure 1. The viewing angle thus corresponds to a viewing angle from a non-depicted engine bay of the vehicle towards the aero shutter 10. Again, a closed state is depicted in which each of the openings 14 is fully obstructed by the respectively associated flaps 16. In the shown example, no air can pass through the openings 14 in the closed state.

For a left group of three openings 14 and respectively associated flaps 16, part of a movement mechanism 36 of the aero shutter 10 is shown. For a right group of three openings 14, no respective part of the movement mechanism 20 is shown, although it is present in this case as well. An axis of symmetry S is indicated in Figure 2. With respect to said axis S, the depicted part of the movement mechanism 36 is mirror-symmetrically provided for the right group of three openings 14 as well, although this is not specifically shown.

Figure 2a shows one of the openings 14 of the right three openings 14 of Figure 2 in detail. For each flap 16, the location of a pivot joint 22 is schematically illustrated. The pivot joint 22 comprises in each case a pin-recess connection. The not specifically illustrated pin is provided at the frame member 12 and received in a not specifically illustrated recess in a flap 16 (or vice versa). A pivot axis or, put differently, rotation axis of each pivot joint 22 extends orthogonally to the image plane. Accordingly, these axes also extend orthogonally to an area of the opening 14.

Each flap 16 is also connected to an optional coupling member 26. These coupling members 26 act as a link for coupling the flaps 16 to a rotatable ring 30 discussed below. The coupling members 26 are pivotably connected to each flap 16 by forming a pin-recess-connection 28 as indicated for the lowermost flap 16 in Figure 2a. The recess may be configured as a through-hole. Again, a pivot axis of this pin-recess-connection 28 extends orthogonally to the image plane.

At an opposite end of said pin-recess-connection 28, the coupling members 26 comprise a coupling portion 29 for being coupled the below discussed rotatable ring 30. In the shown example, the coupling portion 29 is configured as a through-hole. Only some of said coupling portions 29 are marked with a respective reference sign in Figure 2a. A movement direction of the coupling members 26 when changing from the depicted closed state to an open state as indicated by arrows in Figure 2a.

Referring again to Figure 2, for each of the left group of openings 14, a planar rotatable ring 30 is shown. As further evident from the below discussed Figure 3, at a planar axial face facing away from the viewer in Figure 2, each of said rings 30 comprises a number of circumferentially distributed pins 32. These pins 32 are rotatably received in the coupling portions 29 of the coupling members 26 (see Fig. 2a). Again, an axis of rotation of this connection extends orthogonally to the image plane of Figures 2 and 2a.

The rotatable rings 30 each comprise an opening extending concentrically to the opening 14 that is to be opened and closed as well as along a circumference of said opening 14. Further, the rotatable rings 30 are rotatable about a rotation axis extending orthogonally to the image plane of Figure 2 and thus in parallel to several of the previously mentioned rotation axes and/or pivot axes.

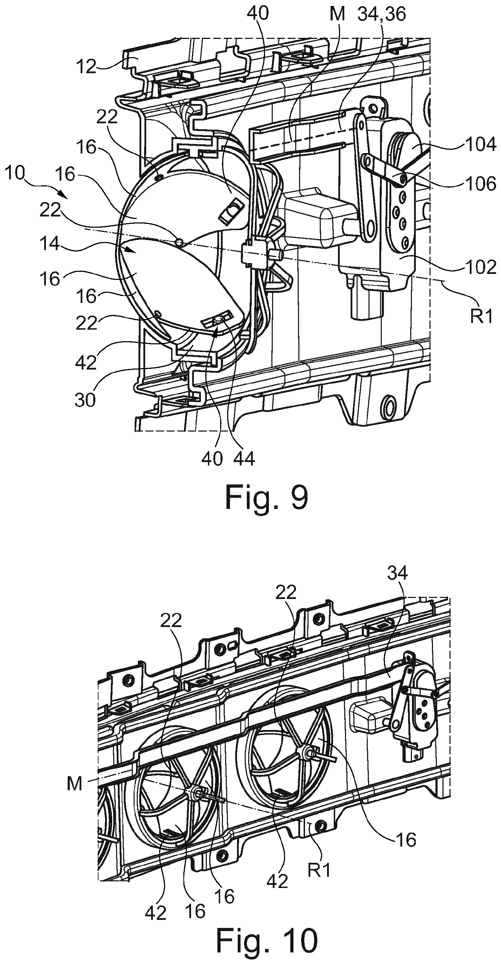

The rotatable rings 30 are coupled to a linearly displaceable member 34. This member 34 is displaceable along an axis M indicated in Figure 2. The displaceable member 34 is connected to a non-specifically depicted actuator, similar to the below discussed example of Figures 9 and 10.

The rotatable rings 30 represent second members of a common movement mechanism 36 of the aero shutter 10. The linearly displaceable member 34 (two of which are provided overall) is also comprised by said common movement mechanism 36. The frame member 12 represents a first member which, in the shown example, is stationary and relative to which each of the rotatable rings 30 (i.e. each of the second members) is movable. As explained above, each flap 36 is connected to the first member (i.e. frame member 12) via the pivot joints 22 and to a movable second member (i.e. rotatable ring 30) via the coupling members 26.

With respect of Figures 3 and 4, operation of the aero shutter 10 for changing between the closed and opened state is discussed. Figures 3 and 4 show an isolated front view of the left three openings 14 of Figure 2 along with the depicted part of the movement mechanism 36.

In Figure 3, the closed state is depicted. The linearly movable member 34 is displaced in a left direction along its movement axis M. When displaced towards the right along the movement axis M, the state of Figure 4 is achieved. As a result of said movement, a pushing force F is exerted onto the rotatable rings 30. These are thus rotated in a clockwise direction around a rotational axis R that is indicated for one of the rings 30 in Figure 3. Again, it can be seen that this rotation axis R extends orthogonally to a plane of the openings 14.

When rotating the rotatable rings 30 in this manner, they exert a pushing force onto each of the coupling members 26 that are respectively coupled thereto. A direction of said pushing force is indicated in Figure 2a by respective arrows. This force is exerted onto the flaps 16 which, however, are circumferentially held in position by the pivot joints 22. That is, the pivot joints 22 act as a counter bearing preventing a shifting of the entire flaps 16 along the circumference of the openings 14. Instead, the flaps 16 about their respective pivot joints 22. Specifically, the flaps 16 each rotate away from a centre of the openings 14 to at least partially open them, see Figure 4. In the shown example of Figure 4 (i.e. when looking at a front of the non-depicted vehicle), each of the flaps 14 rotate simultaneously and in the same clockwise direction about their respective pivot joints 22.

For returning to the closed state of Figure 3, the linearly movable member 34 is moved in the opposite direction along the axis M, thereby exerting a pulling force onto the rotatable rings 30 which rotates them back into the state of Figure 3. In consequence, the movement of the flaps 16 is reversed so that these assume their respectively closed positions of Figure 3.

With respect to the depicted first embodiment, it is also noted that each of the flaps 16 has curved outer edges 18, 20 as can best be seen in Figure 2a. At least in the closed state, each of these edges 18, 20 is arranged adjacent to and in preferably in contact with a respectively opposite edge of a circumferentially adjacent flap 16. As indicated for one exemplary flap 16, one of said edges 18 is convexly curved or, put differently, bulges outwardly in the direction of the respectively adjacent flap 16. The other edge 20 is concavely curved, thus bulging inwardly away from the respectively adjacent flap 16. The edges 18, 20 form circumferentially opposite edges of the flap 16. Also, they extend between a circumference of the opening 14 and a geometric centre thereof, i.e. extend along a radial direction and/or are radially oriented.

Still further, the curvatures of the edges 18, 20 are complementary. The curvature of the convexly curved edge 18 e.g. has a constant radius with respect to a rotation axis of the pivot joint 22 of the flap 16. Still further, all flaps 16 are similarly sized and shaped, so that each comprises edges 18, 20 as discussed above.

As shown in Figure 2a, each of the respectively convexly curved edges 18 is received in a complementary concavely curved edge 20 of an adjacent flap 16. Likewise, each of the concavely curved edges 20 receives a complementary convexly curved edge 20 of another adjacent flap 16. By way of the edges 18, 20, the flaps 16 can be arranged close to one another and in particular contact one another to tightly close the opening 14. On the other hand, they can be reliably moved apart from one another by way of a space-efficient pivoting movement.

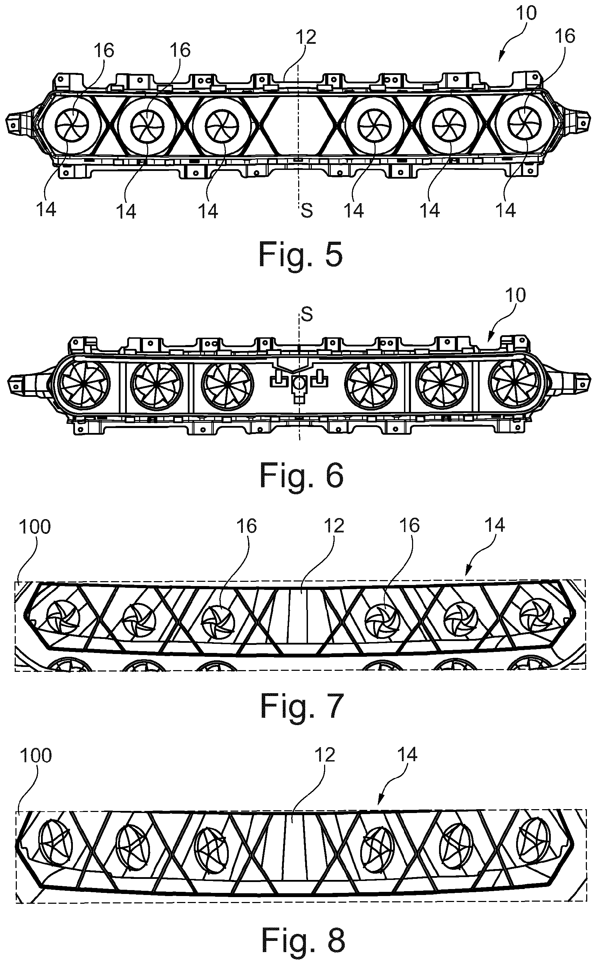

Figures 5 to 10 show an aero shutter 10 according to a second embodiment of the invention. Figure 5 is a view similar to Figure 1, i.e. a front view of the closed aero shutter 10. The aero shutter 10 again comprises a frame member 12 that is to be mounted to a non-illustrated front bumper cover. The aero shutter 10 again comprises the exemplary number of six openings 14, each of which is closed by a number of circumferentially distributed flaps 16. In contrast to the first embodiment, the flaps 16 are non-planar. Instead, they are outwardly bulging in a forward driving direction or, put differently, convexly curved towards the outside of the vehicle.

Figure 6 is a rear view of the aero shutter 10 of Figure 5, similar to Figure 2. In this case, however, no part of any movement mechanism is shown.

Figure 7 is a view similar to Figure 5 with the frame member 12 being mounted to a front bumper cover 100. In this case, the openings 14 are partially opened with the flaps having been rotated away from a geometric centre of the openings 14.

Figure 8 shows a fully opened state of the aero shutter 10 with the openings 14 being substantially unobstructed by the flaps 16.

Figures 9 and 10 show details of the aero shutter 10 and specifically how the flaps 16 are moved. Figure 9 is a partial sectional view of part of the aero shutter 10. The sectional plane cuts through an area of one of the openings 14, with all non-depicted openings 14 and flaps 16 as well their movements being configured similarly.

In Figure 9, two flaps 16 are depicted essentially in full, while a lowermost and uppermost flap 16 are only partially depicted. Again, each flap 16 is coupled to the frame member 12 via a pivot joint 22. In Figure 9, this is visible for three of the flaps 6. The pivot joints 22 comprises a cylindrical projection, e.g. a pin having a circular base, at the frame member 12. This projection is received in an opening in the flaps 16. A non-illustrated rotation axis of the pivot joints 22 extends orthogonally to the circular base of each of the projections. The frame member 12 represents an example of an immovable first member to which the flaps 16 are coupled.

Moreover, the flaps 16 are coupled to a movable second member formed as a rotatable ring 30. In this case, the flaps 16 are coupled to an inner circumferential face of the rotatable ring 30. Generally, the rotatable ring 30 is a part-cylindrical member and in particular comprises a cylinder mantle surface having a circular cross-section. The flaps 16 are coupled to the rotatable ring 30 via coupling portions 40. These coupling portions 40 e.g. comprise a slot-pin connection as depicted. In more detail, the flaps 16 comprise an elongated slot 42 which receive a pin-like projection 44 provided at the inner circumferential face of the rotatable ring 30. Alternatively, the flaps could comprise a pin and the inner circumferential face could comprise a slot.

Similar to the first embodiment, the rotatable ring 30 is coupled to a linearly displaceable member 34 which is movable along an illustrated axis M. The linearly displaceable member 34 is comprised by a common movement mechanism 36 that is configured to move all flaps 16 and thus open and close all openings 14 simultaneously. In accordance with a movement of the linearly displaceable member 34, the ring 30 is movable in a clockwise and anticlockwise direction about a rotation axis R1. When rotated, the projections 44 exert a force against the edges of the slots 42 and thus the flaps 16, causing the letter to rotate about the pivot joints 22. This rotation results in the flaps 16 changing between their respective opened and closed states. In case of Figure 9, a clockwise rotation of the depicted rotatable member 30 moves the flaps 16 towards the opened position of Figure 8. This is correspondingly shown in Figure 10. The fact that a rotation of the flap 16 has taken place in Figure 10 is also evident from the depicted orientation of the slots 42 which differs from that Figure 9.

From Figures 9 and 10, it can also be seen that an actuator 102 is provided, e.g. as part of the movement mechanism 36. The actuator 102 has a rotatable output member 104 that is coupled to the linearly displaceable member 34 via a linkage 106. The linkage 106 is configured to translate the rotating movement of the output member 104 into the linear movement of the linearly displaceable member 34. For each of the left and right three openings 14 of Figures 5-8, a respective linearly displaceable member 34 is provided and the actuator 102 is located in between them at the indicated plane of symmetry S in Figures 5 and 6. The linkage 106 is configured to linearly displace both members 34 so that all openings 14 are opened and closed simultaneously in an identical manner.

## Claims

1. An aero shutter (10) for a vehicle, comprising:
at least one opening (14) through which air can flow;
a plurality of flaps (16) that are distributed along a circumference of the opening (14),
each flap (16) being rotatable about a pivot joint (22) between a closed state in which it covers a section of the opening (14) and an opened state in which it does not cover the opening (14) or only covers it to a lesser extent compared to the closed state.

2. The aero shutter (10) of claim 1,
wherein the flaps (16) are configured to jointly cover the entire opening (14) when each flap (16) assumes its closed state.

3. The aero shutter (10) of claim 1 or 2,
wherein the flaps (16) are coupled to a common movement mechanism (36) that is operable to simultaneously rotate the flaps (16) about their pivot joints (22).

4. The aero shutter (10) of any of the previous claims,
wherein a rotation axis of each pivot joint (22) extends at an angle to an area of the opening (14).

5. The aero shutter (10) of any of the previous claims,
wherein the aero shutter (10) comprises a first member (12) and a second member (30) that are movable relative to one another,
wherein each flap (16) is connected to the first member (12) via the pivot joint (22) and each flap (16) is coupled to the second member (30),
wherein during the relative movement of the first member (12) and second member (30), each flap (16) is rotatable about the pivot joint (22) to move between the opened and closed state.

6. The aero shutter (10) of claim 5,
wherein the second member (30) is rotatable about a rotation axis (R1) that extends at an angle to the opening (14).

7. The aero shutter (10) of claim 5 or 6,
wherein the second member (30) extends along at least a section of the opening's circumference.

8. The aero shutter (10) of any of claims 5 to 7,
wherein the second member (30) is ring-shaped and/or is comprises cylindrical section.

9. The aero shutter (10) of any of claims 5 to 8,
wherein the first member (12) is immovable.

10. The aero shutter (10) of any of claims 5 to 9,
wherein the coupling between each flap (16) and the second member (30) includes a rotational degree of freedom and/or a linear degree of freedom.

11. The aero shutter (10) of any of the previous claims,
wherein the flaps (16) are flat.

12. The aero shutter (10) of any of the previous claims,
wherein the flaps (16) are convexly curved relative to the opening (14).

13. The aero shutter (10) of any of the previous claims,
wherein the flaps (16) comprise at least a first flap (16) and a second flap (16), the first flap (16) having a first edge (18) facing a second edge (20) of the second flap (16) wherein the first edge (18) and the second edge (20) are complementary curved.

14. The aero shutter (10) of any of the previous claims in combination with claim 3, comprising a plurality of openings (14) each having a respective plurality of flaps (16), wherein all flaps (16) are coupled to the common movement mechanism (36) and the common movement mechanism (36) is operable to simultaneously rotate all flaps (16) to simultaneously cover and open each of the openings (14).

## Amended claims

### Amended claims in accordance with Rule 137(2) EPC.

1. An aero shutter (10) for a vehicle, comprising:
at least one opening (14) through which air can flow;
a plurality of flaps (16) that are distributed along a circumference of the opening (14), each flap (16) being rotatable about a pivot joint (22) between a closed state in which it covers a section of the opening (14) and an opened state in which it does not cover the opening (14) or only covers it to a lesser extent compared to the closed state,
**characterized in that** the flaps (16) are coupled to a common movement mechanism (36) that is operable to simultaneously rotate the flaps (16) about their pivot joints (22),
wherein the aero shutter (10) comprises a first member (12) and a second member (30) that are movable relative to one another,
wherein each flap (16) is connected to the first member (12) via the pivot joint (22) and each flap (16) is coupled to the second member (30),
wherein during the relative movement of the first member (12) and second member (30), each flap (16) is rotatable about the pivot joint (22) to move between the opened and closed state; and
wherein the second member (30) is rotatable about a rotation axis (R1) that extends at an angle to the opening (14),
the second member (30) is connected to a linearly movable member (34) of the common movement mechanism (36).

2. The aero shutter (10) of claim 1,
wherein the flaps (16) are configured to jointly cover the entire opening (14) when each flap (16) assumes its closed state.

3. The aero shutter (10) of any of the previous claims,
wherein a rotation axis of each pivot joint (22) extends at an angle to an area of the opening (14).

4. The aero shutter (10) of any of the previous claims,
wherein the second member (30) extends along at least a section of the opening's circumference.

5. The aero shutter (10) of any of the previous claims,
wherein the second member (30) is ring-shaped and/or is comprises cylindrical section.

6. The aero shutter (10) of any of the previous claims,
wherein the first member (12) is immovable.

7. The aero shutter (10) of any of the previous claims,
wherein the coupling between each flap (16) and the second member (30) includes a rotational degree of freedom and/or a linear degree of freedom.

8. The aero shutter (10) of any of the previous claims,
wherein the flaps (16) are flat.

9. The aero shutter (10) of any of the previous claims,
wherein the flaps (16) are convexly curved relative to the opening (14).

10. The aero shutter (10) of any of the previous claims,
wherein the flaps (16) comprise at least a first flap (16) and a second flap (16), the first flap (16) having a first edge (18) facing a second edge (20) of the second flap (16) wherein the first edge (18) and the second edge (20) are complementary curved.

11. The aero shutter (10) of any of the previous claims,
comprising a plurality of openings (14) each having a respective plurality of flaps (16), wherein all flaps (16) are coupled to the common movement mechanism (36) and the common movement mechanism (36) is operable to simultaneously rotate all flaps (16) to simultaneously cover and open each of the openings (14).
